# EUROPEAN PATENT SPECIFICATION

(11) **EP 3 774 258 B1**
(45) Date of publication and mention of the grant of the patent: **19.07.2023**
(21) Application number: 19718938.4
(22) Date of filing: 03.04.2019
(51) Int. Cl.: B29C 41/00, B32B 27/06, B32B 27/30, B32B 27/40, C08L 27/06, C08L 51/00, C08K 5/00, C08K 5/103, C08K 5/12

(54) **PVC-BASED COMPOSITION AND SKIN MEMBER**
ZUSAMMENSETZUNG AUF PVC-BASIS UND HAUTMITGLIED
COMPOSITION À BASE DE PVC ET ÉLÉMENT DE PEAU

(30) Priority: 09.04.2018 US 201862654600 P
(43) Date of publication of application: 17.02.2021
(73) Proprietor: Dow Global Technologies, LLC, Midland, MI 48674 (US); Rohm and Haas Company, Collegeville, PA 19426 (US)
(72) Inventor: WALIA, Parvinder S., Midland, MI 48674 (US); GUO, Hailan, Collegeville, PA 19426 (US)
(74) Representative: Beck Greener LLP
(86) International application number: PCT/US2019/025527
(87) International publication number: WO 2019/199535

(56) References cited:
- EP-A1- 0 619 328
- WO-A1-2016/064823
- JP-A- 2000 143 917
- US-A- 4 366 281
- US-A1- 2017 240 736

## Description

### FIELD

The present invention relates to a polyvinylchloride (PVC)-based composition and to a process for making an article therefrom.

### BACKGROUND

Polyvinyl chloride (PVC) is a widely used material in a variety of market segments such as automobile; building and construction; medical and consumer care; and residential and commercial buildings. PVC is also extensively used in automotive interior for soft touch applications, for example, instrument panels, door panels and artificial leather.

Slush molding of interior soft skins is one method that produces the best surface replication in multiple grains across a part. Slush molding is a preferred method of making interior soft skins for instrument and door panels and other interior trim parts. For example, complex shapes, grain mixes, geometric grains, deep profile lettering, and logos are needed for parts. Surfaces with exceptional tactile feel and adjustable gloss levels are achieved using slush molding. To improve the flexibility of PVC material for cold temperatures (for example, -30 °C ductility), plasticizers at concentrations of approximately (~) 50 parts per hundred parts (phr) are used to provide subzero temperature ductility.

Heretofore, phthalate compounds have been used as plasticizers for PVC materials to provide a ductile PVC material. However, phthalate compounds are prone to migration over time; and thus, the phthalate compounds can become detrimental to the integrity of the PVC material. For example, plasticizer migration disadvantageously creates "fogging" and brittleness to the PVC material over time. Thus, the performance of PVC skins deteriorates over time. And, despite the use of "super" stabilisers in PVC materials, plasticizer migration remains a problem with the use of known plasticizers.

In the automotive industry, as the PVC skin deteriorates over time, the deployment of airbags made of PVC in automobiles becomes a problem at cold (subzero) temperatures. Embrittled, deployed skins tend to crack and fragment at cold temperatures. During cold temperature airbag deployment, fragmentation of the airbag door area creates air-borne debris that can cause personal injury to the passenger in the automobile. Providing airbags made of PVC material that do not fragment during deployment is a critical requirement for installation of PVC airbags in both new as well as "end of life" vehicles.

A heat-aging test is commonly used by automobile manufacturers to predict and understand the performance of an aged instrument panel. For example, it has been found that plasticized PVC will sacrifice more than 35 percent (%) of its original physical properties when exposed to heat at temperatures above 110 °C for periods of 500 hours or longer. When plasticized PVC is exposed to this kind of heat, the plasticized PVC loses its physical properties and the plasticized PVC becomes brittle. The accelerated loss of plasticizer contributes to the embrittlement of an article made from the plasticized PVC. Thus, an airbag made of plasticized PVC, when it becomes brittle and deployed, can result in fragmentation of the PVC material, especially when an airbag made of plasticized PVC material is deployed at cold temperatures (for example, at a temperature of -30 °C). Therefore, there is a need in the automotive industry for technology that improves the heat aging performance of plasticized PVC and that enables maintaining a low temperature ductility of plasticized PVC over the life time of a vehicle that employs parts made of plasticized PVC.

EP619328 discloses a rubbery polymer which can be blended with PVC to make leather compositions. The rubbery polymer comprises repeat units which are comprised of (a) butyl acrylate, (b) at least one member selected from the group consisting of methyl methacrylate, ethyl methacrylate, methyl acrylate and ethyl acrylate, (c) acrylonitrile, (d) styrene, (e) a half ester maleate soap, and (f) a cross-linking agent.

JP2000143917 discloses a composition of 40 weight % PVC, 40 weight % acrylic core/shell polymer and 20% plasticizer.

### SUMMARY

One aspect of the present invention is directed to providing a PVC-based composition that exhibits improved impact performance ductility at cold temperatures (e.g., -30 °C) and that can be used for making soft, slush-molded interior skins, for example used in automobile applications. In one embodiment, a portion of the PVC in the PVC-based composition can be replaced with a flexible acrylic resin (FAR) while keeping the plasticizer content in the composition constant; or, in another embodiment, the plasticizer content in the composition can be reduced when adding FAR to the PVC-based composition. Surprisingly, the PVC-based composition containing FAR exhibits improved impact performance at cold temperatures (e.g., -30 °C). Furthermore, depending on the selection of the plasticizer used in the composition, the ductility of the PVC material at low temperatures (e.g., -30 °C) can be beneficially improved.

The PVC-based composition containing FAR in plasticized PVC can improve the cold temperature ductility. More importantly, the cold temperature ductility of a part made from the PVC-based composition can be significantly higher after heat aging (e.g., heat aging at a temperature of 120 °C) the part. Thus, one objective is to provide a PVC-based composition including FAR to make the PVC material more flexible; and to impart the PVC material with improved cold temperature ductility.

Another objective is to provide: (1) parts made from the PVC-FAR blends that demonstrate improved heat aging as measured by the degree of degradation, discoloration, and embrittlement of the parts; (2) parts that have polyurethane foamed onto the parts; and (3) parts made from the PVC-FAR blends that exhibit a significant improvement in cold temperature impact performance after heat aging.

Another aspect of the present invention is directed to a method of manufacturing the above PVC-based composition.

### BRIEF DESCRIPTION OF THE DRAWINGS

Figure 1 is a schematic diagram of a core-shell polymer material showing the various layers of the core-shell material of the present invention.
Figure 2 is a photograph of various unaged film samples showing the films after being tested by IDI at -30 °C wherein sample A is a 50/50 PVC/FAR blend, sample B is a 70/30 PVC/FAR blend, and sample C is a neat PVC film.
Figure 3 is a photograph of various aged film samples showing the films after being aged at 120 °C for 500 hours and after being tested by IDI at -10 °C wherein sample A is a 50/50 PVC/FAR blend, sample B is a 70/30 PVC/FAR blend and sample C is a neat PVC film.
Figure 4 is a photograph of various film samples showing aged and unaged films after being tested by IDI at 0 °C wherein sample A1 is an unaged PVC film, sample A2 is an aged PVC film, sample B 1 is an unaged 70/30 PVC/FAR blend, and sample B2 is an aged 70/30 PVC/FAR blend.
Figure 5 is a photograph of various film samples showing aged and unaged films after being tested by IDI at -30 °C wherein sample A1 is an aged PVC film, sample A2 is an unaged PVC film, sample B1 is an aged 70/30 PVC/FAR blend, and sample B2 is an unaged 70/30 PVC/FAR blend.
Figure 6 is a photograph of a pair of PU foamed film samples before being heat aged wherein sample A is a PVC film and sample B is a 70/30 PVC/FAR blend film.
Figure 7 is a photograph of the pair of PU foamed film samples of Figure 6 after being heat aged at 120 °C for 400 hours wherein sample A is a PVC film and sample B is a 70/30 PVC/FAR blend film.

### DETAILED DESCRIPTION

### Definitions

"Ductility" or "ductile" as used herein with reference to a material, means that the material has flexibility and a sheet of the material can perform without breaking (at a given temperature). The cold flex test in Ford specification WSS-M4D985-A3 defines a material as flexible where a sheet sample (50 x 150 mm) can bend 180 degrees over a 20 mm diameter mandrel without cracking. Similarly, the dart impact testing, as defined in ISO 6603 or ASTM D376, defines ductility as the ability of dart to penetrate a film sample at a certain speed (e.g., 6.7 meters per second (m/s)) without initiating any cracks or fragmentation.

"Cold temperature impact performance", as used herein with reference to a material, means the ability of the material to withstand a high force or shock applied to the material over a short period of time. Herein, cold temperature impact performance is the ability of the material to be ductile at subzero temperatures (e.g., a temperature of between 0 °C and - 40 °C).

"Heat aging", as used herein with reference to a material, means the ability of the material to retain properties after conditioning for long periods of time at high (greater than ambient) temperatures (e.g., 1,000 hours at 120 °C). Ford specification WSS-M4D985-A3 defines acceptable heat aging of a material as a loss in tensile strength of less than (<) 25 % of the material's original value and a loss in elongation to break of less than 50 % of the material's original value.

"Impact resistance", as used herein with reference to a material, means the ability of the material to withstand a high force or shock applied to the material over a short period of time. Good impact resistance is the ability of a material to absorb energy and plastically deform without fracturing (also referred as "toughness")

A "tailored polymer melt rheology", as used herein with reference to a resin product, means that the resin product can be processed into a film/sheet, or injection molded into articles using conventional plastic melt processing equipment including, for example, film extrusion/calendaring, injection molding, and thermal forming.

"Compatibility", as used herein with reference to a polymer, means the ability of two polymers to mix at a homogeneous level for the resulting polymer blend to give a desired performance.

"Miscibility", as used herein with reference to a polymer, means the ability of two polymers to form a very homogeneous polymer blend at the molecular level.

"Migration", as used herein with reference to a plasticizer, means the movement of a plasticizer out of a part (e.g., a sheet, skin, or molded part) and the loss of the plasticizer to the environment or into a composite material (e.g., a PU foam material) adjoining the part. Migration is a function of temperature and time and increases with higher (e.g., greater than ambient) temperatures and longer times.

"Tensile strength", as used herein with reference to a material, means the maximum stress that a material can withstand while being stretched or pulled (for example, according to the pull test procedure described in ASTM D412).

In one broad embodiment, the PVC-based composition of the present invention includes (a) PVC resin, (b) a core-shell copolymer resin of methyl methacrylate and butyl acrylate, having crosslinked butyl acrylate as the core and a methyl-methacrylate rich composition as the shell ; and (c) one or more plasticizers, wherein the concentration of the polyvinyl chloride resin is from 20 weight percent to 60 weight percent; the concentration of the core-shell polymer resin is from 15 weight percent to 35 weight percent; and (c) the concentration of the plasticizer is from 20 weight percent to 60 weight percent, based on the total weight of all components in the composition. Preferably, the PVC-based composition may also include one or more heat stabilizers, one or more UV stabilizers, and/or one or more antioxidants as a component (d). In a preferred embodiment, the PVC-based composition may be used to manufacture automobile parts such that the parts have improved properties such as increased heat aging property and low temperature impact performance property after heat aging.

The PVC resin, component (a), of the PVC-based composition can be any one or more rigid PVC compounds; or can be a PVC material that already contains a plasticizer agent, component (c) (i.e., a plasticized PVC material). For example, the plasticized PVC material may be pre-formulated with a plasticizing agent such that the total concentration of the plasticizing agent in the composition can be generally greater than 20 weight percent (wt %) in one embodiment, and less than 80 wt % in another embodiment as described herein below with reference to the plasticizer, component (c).

The PVC resin, component (a), may include for example suspension or emulsion grades of PVC, designated by those in the industry with a "K" value of from K56 to K72. As known to those skilled in the art, a "K" value is a measure of PVC resin molecular weight based on measurements of PVC solution viscosity as described in ISO 1628-2 (1998). A higher K value indicates a higher PVC molecular weight. K56 to K72 PVC grades of PVC materials are commonly used, for example, for manufacturing film and sheet products for packaging applications; and for building and construction applications.

Generally, the amount of PVC component (a) used can be for example from 20 wt % to 60 wt % in one embodiment; from 30 wt % to 60 wt % in another embodiment, from 40 wt % to 60 wt % in still another embodiment; and from 55 wt % to 60 wt % in yet another embodiment; based on the total weight of all components in the composition.

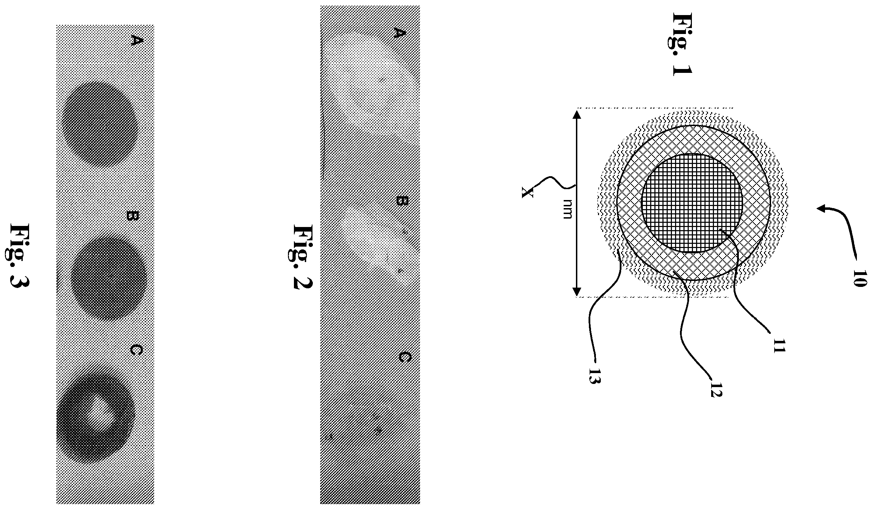

With reference to Figure 1, there is shown a FAR core-shell polymer resin, generally indicated by numeral 10, including a crosslinked core 11, an intermediate layer 12, and an outer layer or shell 13. The overall size of the core-shell polymer resin product 10, as indicated by line X in Figure 1, may be from 90 nanometers (nm) to 120 nm in one embodiment, from 140 nm to 170 nm in another embodiment, and from 230 nm to 300 nm in still another embodiment.

The FAR resin useful as component (b), is a copolymer of methyl methacrylate (MMA) and butyl acrylate (BA) with crosslinked BA as the core 11; and a MMA-rich composition as the outermost layer or shell 13. Suitable FAR resin compounds useful as component (b) may include, for example, FAR resin product grades available from The Dow Chemical Company such as products designated as 21308-XP, 21309-XP and 21520-XP, 21501-XP; and mixtures thereof.

In general, concentration of the FAR resin, component (b), useful in the PVC-based composition ranges from 15 wt % to 35 wt %, based on the total weight of all components in the composition.

With reference to Figure 1 again, there is shown the crosslinked core 11. The core 11 is a crosslinked rubber. The crosslinked rubber beneficially provides impact resistance to an article made from the PVC-based composition.

The diameter of the core layer 11 may be from 90 nm to 100 nm in one embodiment, from 120 nm to 130 nm in another embodiment, and from 200 nm to 210 nm in still another embodiment.

The outermost layer or shell 13 may comprise, for example, from 98.5 wt % to 100 wt % units derived from methyl methacrylate. outermost layer 13 may include, for example, from 0 wt % to 1.5 wt % units derived from one or more chain transfer agents; and the outermost layer 13 may have, for example, a T_{g} of from 40 °C to 110 °C. The optional functional groups incorporated into the outer layer 13 beneficially provide a compatibility effect between the core-shell polymer resin product with other polymeric substrates.

A variety of one or more conventional plasticizer agents or compounds can be used as component (c) in the PVC-based composition. In one embodiment, for example, the plasticizer can be one or more of phthalates such as diisononyl phthalate (DINP), diisodecyl phthalate (DIDP) and di-2-ethlehexyl phthalate (DEHP); a compound having the following chemical structure (I): 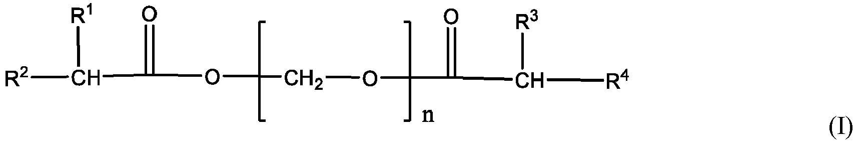 wherein R¹, R², R³, and R⁴ in structure (I) above, is each independently hydrogen or an organic group having 1 or more carbon atoms, and n is from 1 to 20; adipic acid esters such as diisononyl adipate (DINA) and diisodecyl adipate (DIDA) useful for cold temperatures; sebacic acid esters such as dibutyl sebacate (DBS) and di-2-ethylhexyl sebacate (DOS) useful for cold temperatures; phosphate softeners and polymeric softeners useful for low migration and resistance to extraction; trimelliates useful for resistance to high temperatures; and mixtures thereof.

The plasticizer, component (c), is added to the PVC-based composition in a concentration of generally from 20 wt % to 60 wt %, from 30 wt % to 50 wt % in still another embodiment, and from 40 wt % to 50 wt % in yet another embodiment.

In the claimed method of making the PVC-based composition with the components described above, the concentration of the polyvinyl chloride resin in the PVC-based composition is from 20 wt % to 60 wt %; the concentration of the flexible acrylic resin in the PVC-based composition is from 15 wt % to 35 wt %; and the concentration of the plasticizer in the PVC-based composition is from 20 wt % to 60 wt %.

A variety of other components can be added to the PVC-based composition including, for example, one or more of heat stabilizers, ultra violet light (UV) stabilizers, antioxidants, and mixtures thereof. Suitable heat stabilizers can be selected, for example, from one or more of metal-based salts and blends thereof such as alkaline earth metal salts (e.g., calcium or barium metal salts) in combination with cadmium or zinc salts (mixed-metal stabilizers); rare earth metal salts such as those based on lanthanum; basic and neutral lead salts; and mixtures thereof. The heat stabilizer can also be selected from one or more of metal-free, organic compounds (e.g., urea or thiourea); organotin compounds such as mercaptides, tin carboxylates, and octyl tin maleates; and mixtures thereof. Other heat stabilizers added to the PVC-based composition can include, for example, co-stabilizers such as epoxidized esters; melamine derivatives; and mixtures thereof. The heat stabilizer may be added to the PVC-based composition in a concentration of generally from 0.01 wt % to 2 wt % in one embodiment, from 0.05 wt % to 1.5 wt % in another embodiment, and from 0.1 wt % to 1 wt % in still another embodiment.

The UV stabilizer can be selected, for example, from one or more of UVA (ultraviolet light absorbers); HALS (hindered amine light stabilizer); and blends thereof; and mixtures thereof. The UV stabilizer may be added to the PVC-based composition in a concentration of generally from 0.01 wt % to 2 wt % in one embodiment, from 0.03 wt % to 1.5 wt % in another embodiment, and from 0.1 wt % to 1 wt % in still another embodiment.

The antioxidant can be selected, for example, from one or more of phenolics; phosphites; thioesters; amines; and blends thereof; and mixtures thereof. The antioxidant may be added to the PVC-based composition in a concentration of generally from 0.01 wt % to 2 wt % in one embodiment, from 0.03 wt % to 1.5 wt % in another embodiment, and from 0.1 wt % to 1 wt % in still another embodiment.

Other optional compounds or additives that may be added to the PVC-based formulation may include, for example, fillers such as CaCO₃ and talc. release agents; antistatic agents; foaming agents; surfactants; catalysts; toughening agents; flow modifiers; adhesion promoters; diluents; other stabilizers; other plasticizers, catalyst deactivators; flame retardants; liquid nucleating agents; solid nucleating agents; Ostwald ripening retardation additives; and mixtures thereof. The concentration of the optional compounds or additives, when used in the PVC-based composition, can be generally in the range of from 0 wt % to 20 wt % in one embodiment. In one illustration, for example, the optional additives such as fillers can be added to the PVC-based composition at a concentration of from 0 wt % to 10 wt % when the PVC-based composition is used for film and sheet applications.

In one broad embodiment, the process for making the PVC-based composition includes admixing components (a), (b) and (c) described above; and preferably adding a heat stabilizer, UV stabilizer, and/or antioxidant as component (d) to the composition. The order of mixing of the ingredients is not critical and two or more compounds can be mixed together followed by addition of the remaining ingredients. The ingredients that make up the PVC-based composition may be mixed together by any known mixing process and conventional equipment such as polymer compounding equipment or batch mixers.

The PVC-based composition or formulation produced by the process of the present invention has several advantageous properties and benefits. For example, the miscibility of the formulation can be surprisingly greater than other known compositions, i.e., the components of the PVC-based composition can be intimately mixed such that the FAR resin can be dispersed at the primary particle size; acting as an effective impact modifier. The PVC/FAR blends reduce the migration of the plasticizers out of the system compared to neat PVC system; especially during and after the process of heat aging.

Various methods may be used to fabricate articles or products from the PVC-based composition. For example, the PVC-FAR blends can be used in slush or roto molding. Other methods include injection molding, extrusion, and thermoformed/calendared applications. The PVC-FAR blends can also be co-extruded, over-molded, or used in multilayer structures.

In general, an article or part can be made using the PVC-based composition by first producing, for example, a sheet member substrate having a front surface side (also referred to herein as the skin side or A-side) and back side (also referred to herein as the B-side); and then, producing a foam (e.g., a polyurethane foam) on the B-side of the substrate with the skin side of the substrate remaining clear of other materials and open to the atmosphere. For example, the parts made with the sheet member substrates using the PVC-based composition can be soft interior automotive skins which can be made by slush molding.

When the article made with the PVC-based composition is a film or sheet member, the film or sheet may have a thickness in the range of from 0.2 millimeters (mm) to 2 mm in one embodiment, from 0.4 mm to 1.2 mm in another embodiment, and from 0.5 mm to 1.0 mm in still another embodiment.

The PVC article made in accordance with the above processes advantageously has several advantageous properties and benefits compared to conventional PVC articles. For example, in one embodiment, the PVC article of the present invention exhibits an improvement in heat aging. The heat aging performance property of the PVC article can be measured, for example, by ISO 188 or Ford Spec WSS-M4D985-A3 as defined and determined by the procedure described in ISO 37 (2017) for tensile properties. Generally, the heat aging can be carried out to a time of no more than 1,000 hours (hr) at 120 °C in one embodiment, and from 500 hr to 1,000 hr in another embodiment. In one preferred embodiment, the PVC article can exhibit a maximum change in tensile strength of no more than, or < 25 % and a loss of elongation at break of no more than, or < 50 %.

In another embodiment, the PVC article exhibits an improvement in low temperature impact performance after heat aging. The low temperature impact performance property of the PVC article can be measured, for example, by cold flexibility at -40 °C as defined and determined by the procedure described in Ford Spec WSS-M4D985-A3 (2010). In one preferred embodiment, the PVC article should exhibit no cracks. Alternatively, a method which can be more quantitative and which may be used includes Multiaxial Impact Testing, as described in ISO 6603 or ASTM D3763 (2015), at 6.7 m/s at -30 °C. In one preferred embodiment, the PVC article should be 100 % Ductile. The PVC article's ductility property is important especially when the PVC article is used for air bags installed in vehicles. The PVC is preferably completely ductile because any brittle failure of the PVC air bag provides a danger of broken pieces hitting a passenger during the air bag's deployment.

The PVC-based composition and the article made from the PVC-based composition in accordance with the present invention can be useful in a variety of applications including, for example, for slush molding used commonly for making soft interior automotive skins. In a preferred embodiment, the PVC-based composition may be used for making instrument panels and door panels. Methods useful for manufacturing soft skins are described, for example, in U.S. Patent No. 8,674,027.

### EXAMPLES

The following examples are presented to further illustrate the present invention in detail but are not to be construed as limiting the scope of the claims. Unless otherwise stated all parts and percentages are by weight.

Various raw materials (ingredients) used in the examples which follow are explained hereinbelow in Table I.

**Table I**

| Ingredient | Description | Supplier |
|---|---|---|
| Formolon^{™} 614 (59K) | Polyvinylchloride (PVC) | Formosa Plastics |
| Paraloid^{™} - 21520- XP | Flexible acrylic resin (FAR) - a copolymer of methyl methacrylate and butyl acrylate with a core/shell structure | The Dow Chemical Company |
| WVC 3800 | Plasticizer - triethylene glycol bis (2-ethylhexanoate) | Celanese Incorporation |
| Jayflex^{™} L9P | Plasticizer - a linear phthalate plasticizer | Exxon Mobil |
| Mark 4885 | Heat stabilizer - BaZn stabilizer | Galata Chemicals |
| TM-181 | Heat stabilizer - methyl tin heat stabilizer | PMC Group |
| ESBO | Lubricant - soybean oil epoxide | PMC Group |

### General Procedure for Preparing a Blend

In the examples, 70/30 PVC blends were prepared while keeping the concentration of the plasticizers and the stabilizers constant. The blends were either prepared (blended) using a 2-roll mill; or blended first using a twin-screw extruder and then followed by using the 2-roll mill.

### General Procedure for Preparing a Film Sample

A lab Collin Mill (W. H. Collin GmbH Maschienefabrik, Aichach, Germany) was used to make film samples. The processing was done at 175 °C for 5 minutes. After the milling of the molten polymer blends was completed, the molten polymer was slowly peeled from the metal rolls to obtain a thin film with a thickness of 200 µm. The thin film samples were then used directly for testing.

### Tests

### Tensile Measurements

Tensile measurements were obtaining by using the procedure described in ASTM D412 (2016) or ISO 527 (2012).

### Heat Aging Measurements

The conditions for obtaining heat aging measurements were as follows: 120 °C and 500 hours.

### Instrumented Dart Impact (IDI) Measurements

To measure the instrumented dart impact (IDI) of the article samples (films), 4-inch (101 mm) disks of the samples and a 2-inch (50.8 mm) dart at 6.7 m/s were used. This test can be used by original engineering manufacturers (OEMs) as an indicator of cold temperature air bag deployment. The following cold temperature conditions were used: 0 °C, -10 °C and -30 °C.

Using the above tests, the examples which follow were carried out to highlight improved cold temperature ductility with the use of FAR in PVC (PVC/FAR blend) while keeping other components constant (e.g., plasticizers, stabilizers and additives). In addition, improved heat aging performance and improved cold temperature ductility after aging is described in Table II.

**Table II**

| Example No. | Comp. Ex. A | Inv. Ex. 1 | Inv. Ex. 2 | Comp. Ex. B | Inv. Ex. 3 | Inv. Ex. 4 | Comp. Ex. C | Inv. Ex. 5 |
|---|---|---|---|---|---|---|---|---|
| Sample No. | Sample 1 (0% FAR) | Sample 2 (30% FAR) | Sample 3 (50% FAR) | Sample 4 (0% FAR) | Sample 5 (30% FAR) | Sample 6 (50% FAR) | Sample 7 (0% FAR) | Sample 8 (30% FAR) |
| Concentration | pph | pph | pph | pph | pph | pph | pph | pph |

| COMPONENT | | | | | | | | |
|---|---|---|---|---|---|---|---|---|
| Formolon^{™} 614 | 100 | 70 | 50 | 100 | 70 | 50 | 100 | 70 |
| Paraloid^{™} 21520 XP | 0 | 30 | 50 | 0 | 30 | 50 | 0 | 30 |
| WVC 3800 | 40 | 40 | 40 | | | | | |
| Jayflex^{™} L9P | | | | 40 | 40 | 40 | 50 | 50 |
| Mark 3885 | 2.5 | 2.5 | 2.5 | | | | | |
| TM-181 | | | | 3 | 3 | 3 | 3 | 3 |
| ESBO | 5 | 5 | 5 | 3 | 3 | 3 | 3 | 3 |
| Stearic Acid | 0.1 | 0.1 | 0.1 | | | | | |
| Total | 147.6 | 147.6 | 147.6 | 146 | 146 | 146 | 156 | 156 |

| TESTS | | | | | | | | |
|---|---|---|---|---|---|---|---|---|
| Unaged IDI, at -30 °C and 6.7 m/s | 2 ductile 3 brittle | 5 ductile | 5 ductile | 4 brittle | 4 brittle | 4 brittle | 5 brittle | 3 ductile 2 brittle |
| Load at Peak Mean (N) | 450 | 724 | 479 | 54 | 357 | 219 | 187 | 528 |
| Aged IDI, at -10 °C and 6.7 m/s | | | | 4 brittle | 4 brittle | 4 brittle | | |
| Load at peak Mean (N) | | | | 35 | 137 | 268 | | |
| Aged IDI, at 0 °C and 6.7 m/s | | | | | | | 4 brittle | 5 ductile |
| Load at peak Mean (N) | | | | | | | 268 | 839 |

The samples of Comparative Example (Comp. Ex.) A, Inventive Example (Inv. Ex.) 1, and Inv. Ex. 2 described in Table II were not aged because of an insufficient stabilizer package. However, the results of Comp. Ex. A, Inv. Ex. 1, and Inv. Ex. 2 show that the present invention composition improved ductility with the use of FAR replacing PVC with having the concentrations of the plasticizer and stabilizers kept constant.

The samples of Comp. Ex. B, Inv. Ex. 3, and Inv. Ex. 4 described in Table II were aged and the samples aged well, but the plasticizer amount was too low to achieve a -30 °C ductility. However, the results of Comp. Ex. B, Inv. Ex. 3, and Inv. Ex. 4 show a higher energy absorption with use of FAR replacing PVC (with keeping the plasticizer and stabilizers concentrations constant). The effect can be seen with the unaged and aged samples. These Examples also demonstrate improved aging.

The samples of Comp. Ex. C and Inv. Ex. 5 described in Table II had a higher plasticizer level than Ex. 2. The results of Comp. Ex. C and Inv. Ex. 5 show that the use of FAR (replacing PVC) improves -30 °C ductility (plasticizer and stabilizers constant). The results also demonstrate clear improved ductility after aging at 0 °C.

### Examples 1 and 2 and Comparative Example A

Three blend samples (Samples 1-3) using the components described in Table III were prepared by blending the components in a 2-roll mill mixer. Comparative Example (Comp. Ex.) A is a neat PVC composition while Inventive Example (Inv. Ex.) 1 and Inv. Ex. 2 contained 30 % and 50 % FAR, respectively.

**Table III**

| COMPONENT | Comp. Ex. A; Sample 1 (phr) | Inv. Ex. 1; Sample 2 (phr) | Inv. Ex. 2; Sample 3 (phr) |
|---|---|---|---|
| Formolon 614 | 100 | 70 | 50 |
| Paraloid^{™}- 21520 XP | 0 | 30 | 50 |
| WVC 3800 | 40 | 40 | 40 |
| Mark 3885 | 2.5 | 2.5 | 2.5 |
| ESBO | 5 | 5 | 5 |
| Stearic Acid | 0.1 | 0.1 | 0.1 |

Film samples were made from the blends described in Table III via a 2-roll mill; and the film samples were tested for cold temperature impact performance via IDI and the results of such tests are described in Table IV. The cold temperature IDI impact data described in Table IV shows that the ductility of a film sample at -30 °C can be improved from 40 % ductile with neat PVC to 100 % ductile with the addition of FAR to PVC.

**Table IV**

| Film Sample | Instrumented Dart Impact, -30 °C, 6.7 m/s | | |
|---|---|---|---|
| | Energy Mean (J) | Energy Std. Dev. (J) | Failure Mode |
| PVC (neat) from blend Sample 1 | 6.2 | 5.2 | 2/5 ductile |
| 70/30 PVC/FAR from blend Sample 2 | 6.8 | 0.8 | 5/5 ductile |
| 50/50 PVC/FAR from blend Sample 3 | 4.8 | 0.7 | 5/5 ductile |

### Examples 3 and 4 and Comparative Example B

Three blend samples (Samples 4-6) using the components described in Table V were prepared by blending the components in a 2 roll mill a mixer. The blend samples consisted of FAR blends at 0 % FAR (Sample 4), 30 % FAR (Sample 5), and 50 % FAR (Sample 6).

**Table V**

| COMPONENT | Comp. Ex. B; Sample 4 (phr) | Inv. Ex. 3; Sample 5 (phr) | Inv. Ex. 4; Sample 6 (phr) |
|---|---|---|---|
| Formolon 614 | 100.0 | 70 | 50 |
| Paraloid^{™} - 21520 XP | 0 | 30 | 50 |
| TM-181 | 3.0 | 3.0 | 3.0 |
| Jayflex^{™} L9P | 40.0 | 40 | 40 |
| ESBO | 3.0 | 3.0 | 3.0 |
| Total | 146.0 | 146 | 146 |

Film samples were made from the blends described in Table V with the use of a 2-roll mill; and the film samples were tested for tensile strength. The results of the tests are described in Table VI. As seen with the tensile data described in Table VI, the FAR in the film samples containing FAR has a plasticizing effect on PVC; the break strength is reduced while the elongation (strain at break) is increased. The improved ductility of the samples is also reflected in the impact data described in Table VII.

**Table VI**

| Film Sample | Tensile - Unaged (ISO 527) | | Tensile - Aged (ISO 527) | |
|---|---|---|---|---|
| | Break Strength (MPa) | Strain at Break (%) | Break Strength (MPa) | Strain at Break (%) |
| PVC (neat) from blend Sample 4 | 13.1 | 162 | 24 | 198 |
| 70/30 PVC/FAR from blend Sample 5 | 10.9 | 217 | 20 | 178 |
| 50/50 PVC/FAR from blend Sample 6 | 8.1 | 222 | 11 | 172 |

The cold temperature impact data described in Table VII shows that samples of both PVC and PVC/FAR blends are not ductile at -30 °C. However, the addition of FAR improves energy absorption during dart impact, signifying improved ductility.

**Table VII**

| Film Sample | IDI Unaged (-30 °C); 6.7 m/s | | | IDI Heat aged (-10 °C); 6.7 m/s | | |
|---|---|---|---|---|---|---|
| | Energy Mean (J) | Load at Peak Mean (N) | Mode | Energy Mean (J) | Load at Peak Mean (N) | Mode |
| PVC (neat) from blend Sample 4 | -0.7 | 54 | 4 brittle | -0.9 | 35 | 4 brittle |
| 70/30 PVC/FAR from blend Sample 5 | 1.1 | 357 | 4 brittle | 0 | 137 | 4 brittle |
| 50/50 PVC/FAR from blend Sample 6 | 1 | 219 | 4 brittle | 0.7 | 268 | 4 brittle |

Figures 2 and 3 are photographs showing the neat PVC film Sample 4 and the PVC/FAR blend Samples 5 and 6 after IDI impact testing for the unaged samples and for the heat aged samples. For the unaged samples tested at -30 °C, all samples show brittle fracture mode with samples broken into pieces.

For the heat aged samples, two things can be apparent: (1) the PVC/FAR blend samples show a lower amount of visible discoloration and embrittlement (the amount of stabilizers used in the samples were the same for the PVC/FAR blend samples and the neat PVC sample); and (2) the -10 °C IDI tested blend samples show cracks radiating from the middle (dart penetration) but remain intact. The neat PVC sample, on the other hand, is fractured into pieces. The results obtained from PVC/FAR blend samples are consistent with a higher energy absorption during impact testing.

### Example 5 and Comparative Example C

Two blend samples (Samples 7 and 8) using the components described in Table VIII were prepared: a neat PVC sample with 0 % FAR (Sample 7) and a PVC/FAR blend sample with 30 % FAR (Sample 8). The Samples were prepared including a plasticizer at 50 % phr and additional stabilizers for higher ductility and improved heat aging.

**Table VIII**

| COMPONENT | Comp. Ex. C; Sample 7 (phr) | Inv. Ex. 5; Sample 8 (phr) |
|---|---|---|
| Formolon 614 | 100.0 | 70 |
| Paraloid^{™} - 21520 XP | 0 | 30 |
| TM-181 | 3.0 | 3.0 |
| Jayflex^{™} L9P | 50.0 | 50 |
| ESBO | 3.0 | 3.0 |
| Total | 156.0 | 156 |

Film samples were made from the compositions described in Table VIII; and the films samples were tested for tensile strength (using the procedure in D412) and for IDI at 0 °C. The results of the testing are described in Table IX. The unaged samples for both the neat PVC (Sample 7) and the 30 % FAR blend (Sample 8) were ductile at -0 °C. The results also show that the energy absorbed by the PVC/FAR blend sample is increased three times (3X). In addition, the results show that after heat aging, the neat PVC sample is brittle while the 30 % FAR blend sample is ductile and maintains the high energy absorption.

**Table IX**

| Film Sample | IDI Unaged (0 °C); 6.7 m/s | | | IDI Heat aged (0 °C); 6.7 m/s | | |
|---|---|---|---|---|---|---|
| | Energy Mean (J) | Load at Peak Mean (N) | Mode | Energy Mean (J) | Load at peak Mean (N) | Mode |
| PVC (neat) from blend Sample 7 | 3 | 306 | 5 ductile | 0.4 | 268 | 4 brittle |
| 70/30 PVC/FAR from blend Sample 8 | 9.9 | 634 | 4 ductile | 6.8 | 839 | 5 ductile |

The films samples made from the components described in Table VIII were also tested for tensile strength (using the procedure in D412) and for IDI at -30 °C. The results for the
-30 °C testing are described in Table X. The results for the unaged samples show that neat PVC (Sample 7) is brittle while the 30 % FAR blend sample (Sample 8) is ductile and brittle (60 % ductile). The results also show that the energy absorbed by the PVC/FAR blend sample is increased ten times (10X). In addition, the results show that after heat aging, both the neat PVC sample and the PVC/FAR blend sample were brittle.

**Table X**

| Film Sample | IDI Unaged (-30 ° C); 6.7 m/s | | | IDI Heat aged (-30 ° C); 6.7 m/s | | |
|---|---|---|---|---|---|---|
| | Energy Mean (J) | Load at peak Mean (N) | Mode | Energy Mean (J) | Load at peak Mean (N) | Mode |
| PVC (neat) from blend Sample 7 | 0.5 | 187 | 5 brittle | -0.5 | 48 | 4 brittle |
| 70/30 PVC/FAR from blend Sample 8 | 5.2 | 528 | 3 ductile, 2 Brittle | -0.4 | 79 | 5 brittle |

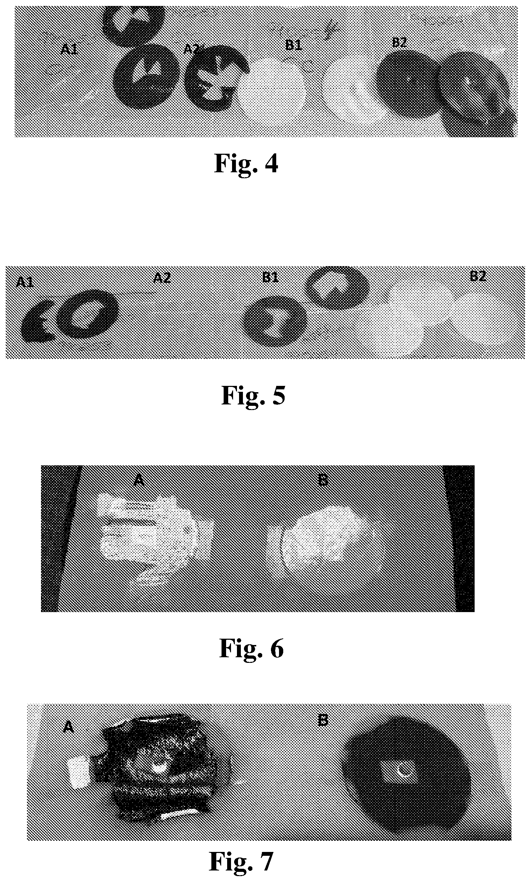

Figures 4 and 5 are photographs showing the neat PVC film sample (Sample 7) and the 30 % FAR blend film sample (Sample 8) after IDI impact testing. The results of the testing show that the 30 % FAR blend sample has a lower amount of visible discoloration and embrittlement (the amount of stabilizers used were the same for the 30 % FAR blend sample and the neat PVC sample). The results of the testing at 0 °C show that the 30% FAR blend sample is ductile when aged and when unaged; while the neat PVC sample is ductile when unaged but becomes brittle after aging (i.e., the PVC sample breaks into pieces). The results for the -30 °C IDI testing shows that the unaged FAR blend sample (Sample 8) is ductile and exhibits some brittle modes, while the neat PVC sample (Sample 7) is 100 % brittle.

### Example 6 and Comparative Example D

Test specimens of the 30 % FAR blend film sample (Sample 8) and the neat PVC film sample (Sample 7) described above in Example 5 and Comparative Example C were used to prepare foam composite samples (Inv. Ex. 6 and Comp. Ex. D). The components used to prepare a polyurethane (PU) foam-forming composition are described in Table X. In general, PU foam-forming composition was injected onto the back side of each of the film specimens of Samples 7 and 8 to form a foam backing layer on the film samples. A typical instrument panel foam system (designated as NM815) available from The Dow Chemical Company was used to provide the foam backing layer to the back side of the PVC and PVC/FAR skins, Samples 7 and 8, respectively. The PU foam composition included a blend of (a) an polyisocyanate component (PAPI 94 Isocyanate available from Dow), and (b) a polyol component (NM815 Polyol made from the components described in Table XI). The foam composition had an Iso Index of 100 Index; and the foam created had a foam density of 8.3 pounds per cubic foot (133 kg/m³).

**Table XI**

| COMPONENT | Description | Concentration (pph) |
|---|---|---|
| VORANOL 4240 | Polyol | 32.60 |
| SPECFLEX NC 630 | Polyol | 32.60 |
| | | |
| SPECFLEX NC 701 | Co-polymer Polyol | 25.10 |
| TEOA - 99 | Crosslinker | 0.70 |
| BL-19 / A-99 | Catalyst | 0.05 |
| Jeffcat ZF-10 | Catalyst | 0.15 |
| DMEA | Catalyst | 0.45 |
| Dabco EG | Catalyst | 0.25 |
| | | |
| VORANOL 4053 | Cell Opener | 3.00 |
| Diexter G 156T-63 | Adhesion Promoter | 1.90 |
| Reactint Black 2151 | Colorant | 0.20 |
| Water | Blowing Agent | 2.70 |
| TOTAL | | 100.00 |

The foaming of the skins was carried out in a 2X Mold (50 cm x 50 cm x 1.3 cm) using a high pressure Graco machine.

Figures 6 and 7 are photographs showing the two composite articles made according to the above process: (1) a neat PVC skin sample (Sample 7) with a foam backing made from the foam composition described in Table XI above; and (2) a 30 % FAR blend skin sample (Sample 8) with a foam backing made from the foam composition described in Table XI above. Figure 6 shows PU foamed skin samples A and B corresponding to Samples 7 and 8 before being heat aged; and Figure 7 shows the PU foamed skin samples A and B corresponding to Samples 7 and 8 after the skin samples have been heat aged at 120 °C for 400 hours. Figures 6 and 7 show that the neat PVC sample degraded to a significantly higher degree compared to the PVC/FAR blend sample. The heat aged PVC/FAR blend sample was also significantly less brittle than the neat PVC sample. The above testing of the composite samples, shows that thermal degradation of the samples is accelerated by the migration of plasticizers from the composition into the PU foam. However, Figure 7 shows evidence that the use of FAR with PVC lowers the impact of the plasticizer migration.

## Claims

1. A polyvinyl chloride-based composition comprising
(a) a polyvinyl chloride resin;
(b) a core-shell copolymer resin of methyl methacrylate and butyl acrylate, having crosslinked butyl acrylate as the core and a methyl-methacrylate rich composition as the shell; and
(c) a plasticizer, wherein the concentration of the polyvinyl chloride resin is from 20 weight percent to 60 weight percent; the concentration of the core-shell polymer resin is from 15 weight percent to 35 weight percent; and (c) the concentration of the plasticizer is from 20 weight percent to 60 weight percent, based on the total weight of all components in the composition.

2. The composition of claim 1, including further one or more heat stabilizers, one or more UV stabilizers, or one or more antioxidants.

3. An article made from the composition of claim 1.

4. The article of claim 3 comprising a skin member made from slush molding, injection or compression molding, extrusion or calendaring.

5. The article of claim 4, including a composite comprising a polyurethane foam backing and the skin member.

6. The article of claim 3 comprising a film or sheet member.

7. A method of making the polyvinyl chloride-based composition of claim 1 comprising admixing (a) the polyvinyl chloride resin, (b) the core-shell polymer resin; and (c) the plasticizer, forming a mixture adapted for manufacturing an article therefrom.

8. A method of making an article from the polyvinyl chloride-based composition of claim 1 comprising the steps of:
(I) admixing (a) the polyvinyl chloride resin, (b) the core-shell polymer resin; and (c) the plasticizer, forming a mixture adapted for manufacturing an article therefrom; and
(II) forming an article from the composition of step (I).

## Patentansprüche

1. Zusammensetzung auf Polyvinylchloridbasis, umfassend
(a) ein Polyvinylchloridharz;
(b) ein Kern-Schale-Copolymerharz aus Methylmethacrylat und Butylacrylat, das vernetztes Butylacrylat als den Kern und eine methylmethacrylatreiche Zusammensetzung als die Schale aufweist; und
(c) einen Weichmacher, wobei die Konzentration des Polyvinylchloridharzes von 20 Gew.-% bis 60 Gew.-% beträgt; die Konzentration des Kern-Schale-Polymerharzes von 15 Gew.-% bis 35 Gew.-% beträgt; und (c) die Konzentration des Weichmachers von 20 Gew.-% bis 60 Gew.-% beträgt, bezogen auf das Gesamtgewicht aller Komponenten in der Zusammensetzung.

2. Zusammensetzung nach Anspruch 1, die ferner einen oder mehrere Hitzestabilisatoren, einen oder mehrere UV-Stabilisatoren oder ein oder mehrere Antioxidantien einschließt.

3. Gegenstand, der aus der Zusammensetzung nach Anspruch 1 hergestellt wird.

4. Gegenstand nach Anspruch 3, umfassend ein Hautelement, das durch Slush-Molding, Spritzguss oder Formpressen, Extrusion oder Kalandrieren hergestellt wird.

5. Gegenstand nach Anspruch 4, der einen Verbundstoff einschließt, umfassend eine Polyurethanschaumunterlage und das Hautelement.

6. Gegenstand nach Anspruch 3, umfassend eine Folie oder ein Blattelement.

7. Verfahren zum Herstellen der Zusammensetzung auf Polyvinylchloridbasis nach Anspruch 1, umfassend ein Mischen (a) des Polyvinylchloridharzes, (b) des Kern-Schale-Polymerharzes; und (c) des Weichmachers, um eine Mischung zu bilden, die zum Fertigen eines Gegenstands daraus geeignet ist.

8. Verfahren zum Fertigen eines Gegenstandes aus der Zusammensetzung auf Polyvinylchloridbasis nach Anspruch 1, umfassend die Schritte:
(I) Mischen (a) des Polyvinylchloridharzes, (b) des Kern-Schale-Polymerharzes; und (c) des Weichmachers, um eine Mischung zu bilden, die zum Fertigen eines Gegenstands daraus geeignet ist; und
(II) Bilden eines Gegenstands aus der Zusammensetzung aus Schritt (I).

## Revendications

1. Composition à base de polychlorure de vinyle comprenant
(a) une résine de polychlorure de vinyle ;
(b) une résine copolymère coeur-écorce de méthacrylate de méthyle et d'acrylate de butyle, ayant de l'acrylate de butyle réticulé en tant que coeur et une composition riche en méthacrylate de méthyle en tant qu'écorce ; et
(c) un plastifiant, dans lequel la concentration en résine de polychlorure de vinyle va de 20 pour cent en poids à 60 pour cent en poids ; la concentration en résine polymère coeur-écorce va de 15 pour cent en poids à 35 pour cent en poids ; et (c) la concentration en plastifiant va de 20 pour cent en poids à 60 pour cent en poids, sur la base du poids total de tous les composants dans la composition.

2. Composition selon la revendication 1, comportant en outre un ou plusieurs stabilisants thermiques, un ou plusieurs stabilisants UV, ou un ou plusieurs antioxydants.

3. Article préparé à partir de la composition selon la revendication 1.

4. Article selon la revendication 3, comprenant un élément de peau préparé à partir d'un moulage par embouage, d'un moulage par injection ou compression, d'une extrusion ou d'un calandrage.

5. Article selon la revendication 4, comportant un composite comprenant un support en mousse de polyuréthane et l'élément de peau.

6. Article selon la revendication 3, comprenant un élément de film ou de feuille.

7. Procédé de fabrication de la composition à base de polychlorure de vinyle selon la revendication 1 comprenant le mélange par adjonction (a) de la résine de polychlorure de vinyle, (b) de la résine polymère cœur-écorce ; et (c) du plastifiant, formant un mélange adapté pour fabriquer un article à partir de celui-ci.

8. Procédé de fabrication d'un article à partir de la composition à base de polychlorure de vinyle selon la revendication 1 comprenant les étapes de :
(I) mélange par adjonction (a) de la résine de polychlorure de vinyle, (b) de la résine polymère coeur-écorce ; et (c) du plastifiant, formant un mélange adapté pour fabriquer un article à partir de celui-ci ; et
(II) formation d'un article à partir de la composition de l'étape (I).
